# EUROPEAN PATENT SPECIFICATION

(11) **EP 2 647 967 B1**
(45) Date of publication and mention of the grant of the patent: **04.01.2017**
(21) Application number: 13162055.1
(22) Date of filing: 03.04.2013
(51) Int. Cl.: G01D 5/347, G01D 5/244

(54) **System and method for monitoring output signals of an encoder**
System und Verfahren zur Überwachung von Ausgangssignalen eines Kodierers
Système et procédé de surveillance de signaux de sortie d'un codeur

(30) Priority: 06.04.2012 JP 2012086990
(43) Date of publication of application: 09.10.2013
(73) Proprietor: Dr. Johannes Heidenhain GmbH, 83301 Traunreut (DE)
(72) Inventor: Yamamoto, Takeshi, Tokyo 193-0826 (JP); Yamashita, Mamoru, Tokyo 204-0003 (JP)

(56) References cited:
- EP-A1- 0 514 081
- US-A- 5 051 579
- US-A1- 2010 283 417
- US-A1- 2011 041 585

## Description

The present invention relates to a system and a method for monitoring output signals of an encoder for detecting deterioration of the encoder. The encoder is designed to measure the amount of displacement and the amount of movement etc. of an object to be measured, by converting the position of a rotating disc or a linear scale to electrical signals.

An encoder converts the position of a rotating disc or linear scale, for example, to electrical signals. In an optical rotary encoder, for example, light emitted by a light-emitting element passes through a rotating disc and a light signal received by a light-receiving element is converted to a rectangular wave digital pulse output signal by a signal processor.

Like other electronic devices and precision devices, an encoder also deteriorates due to changes over time, so the initial performance can no longer be maintained. Causes of encoder deterioration which may be cited include mechanical deterioration of structural components (bearing lifespan etc.), and changes in the state of assembly (component wear). Electrical deterioration of structural components (LED lifespan etc. in the case of optical systems), and also soiling of glass in the case of optical systems, may occur.

When an encoder deteriorates, the level of analog signals and bias inside the encoder generally changes. If the signals output from the encoder are analog signals, it is simple to monitor the state thereof. For example, if the signal level falls below a fixed value, counter measures may be taken such as emitting an alarm, as it is done in many electronic devices. However, when the signals output from the encoder are output as rectangular wave digital pulse signals, the signal forms which can be assessed are only H-level and L-level signals, so deterioration of the encoder is not readily expressed as a signal level and it is difficult to judge whether the encoder has deteriorated. The abovementioned digital pulse signals are obtained by processing analog signals output from the light-receiving element and carrying out the required signal processing for waveform shaping. These kinds of digital signals are most common nowadays.

On the other hand, a special maintenance output line can be provided in order to monitor analog signals inside the encoder, but there are drawbacks to providing a separate circuit for monitoring analog signals in that the number of components increases, the structure becomes more complex, production costs increase and faults are more likely to occur, among other things.

The time over which an encoder deteriorates is therefore conventionally predicted to a certain extent from experimental rules, so maintenance is carried out at fixed intervals and the encoder equipment is replaced in order to maintain reliability. However, when maintenance is carried out at fixed intervals in the manner described above, the safety factor has to be anticipated to a certain extent and the maintenance has to be carried out before the time at which the performance deteriorates. This means that equipment which has not yet deteriorated in performance is often discarded or replaced and this is wasteful in terms of time and cost.

JP2004-138386A discloses a control means for a digital encoder comprising a light-emitting part and a light-receiving part and having a frequency signal generating means for generating a pulse signal having a frequency commensurate with the drive speed of a body which is being driven, said control means being characterized in that it comprises a means for detecting the ON time duty at each period of the frequency signal, and controls the amount of light in the light-emitting part in accordance with the detected duty; the aim in this case is to compensate for reduced performance caused by a deterioration in the sensitivity of the encoder due to ink mist etc.

Furthermore, paragraph 0033 of that document discloses that "The carriage 2 on which the recording head 1 is mounted is configured in such a way that the start-up and end of a frequency signal from the encoder 14 can be detected and the ON time duty for each period can be detected inside an ASIC 501 on the basis of said frequency signal.". In addition, paragraph 0038 discloses that "In step S704 the ON time duty for each period is calculated, and if it is determined that the duty is 55% or more in step S705 and if the cumulative number of recordings or cumulative number of intakes written to the EEPROM 504 is at or above a predetermined value in step S706, it is judged that the sensitivity of the encoder 14 has deteriorated due to ink mist and control is carried out in order to compensate for the deterioration in sensitivity by increasing the amount of light at the LED 101.".

In that document, however, the encoder is used to control the carriage on which is mounted the recording head of an inkjet recording device, and the aim is to detect a deterioration in sensitivity of a photodiode caused by ink mist which is ejected from the recording head. It is therefore not envisaged to detect changes in signals caused by deterioration of mechanical components of the encoder. Moreover, the speed of movement of the carriage is fixed as a rule and therefore the output signals of the encoder are based on a duty ratio of 50%, as disclosed in paragraph 0008 of the above document. The amount of light at the light-emitting part is therefore simply increased if the duty ratio is at or above a predetermined value. It would therefore be difficult to apply the detection system in that document to a usage in which the encoder operation is complex and the duty ratio changes from the initial state.

US-A-2011/041585 discloses a rotary encoder where output signals are monitored by a comparison with reference to in order to detect defects in the encoder itself.

The problem to be solved is that although the output signals from the encoder vary due to changes over time etc., if the encoder detects rectangular wave digital pulse signals which are the result of wave forming analog signals, the wave period, duty, phase difference and phase direction vary according to the operating speed, resolution and movement direction, which makes these parameters difficult to determine, and it is difficult to detect deterioration.

It is an object of the present invention to provide a system, as well as a method to detect actual deterioration of an encoder from digital pulse signals output from the encoder, and therefore in eliminating the wasted time and expense for the maintenance involved in taking the necessary measures.

The first part of the above-mentioned object is achieved by a system for monitoring output signals of an encoder, comprising:
- an object being measured which is rotated or moved;
- an encoder body which outputs output signals commensurate with the amount of displacement or the amount of movement of the object being measured;
- a controller for determining a warning output by comparing an output signal from the encoder body with output signal data stored in a storage device, wherein
the storage device is adapted to store basic operation patterns of the object being measured and signals output from the encoder body and wherein
the controller is adapted to
- associate a basic operation pattern of the object being measured which has been set in an initial state with an output signal output from the encoder body at that time and
- store this association in the storage device and
- compare the output signal from the encoder body obtained by subsequent basic operation with the output signal data from basic operation in the initial state which is stored in the storage device, and
- output this comparison data or measurement data or a warning if the difference between the two signals is greater than a fixed reference value.

At least two signals may be output from the encoder body and at least two selected from the signal wave period, phase difference, duty cycle and signal level may be measured by means of a clock signal or subjected to analog/digital conversion in order to obtain output signal data.

The second part of the above-mentioned object is achieved by a method for monitoring output signals of an encoder, wherein
- a basic operation pattern of an object being measured is set and operated in an initial state and an output signal output from an encoder body correspondingly with the basic operation is associated with the basic operation pattern and stored in a storage device,
- the object being measured is then operated in accordance with the basic operation pattern,
- an output signal output from the encoder body is measured at that time and
- the measurement data obtained and output signal data in the initial state stored in the storage device are compared and this comparison data or measurement data, or a warning is output if the difference between the two signals is greater than a fixed magnitude.

At least two signals may be output from the encoder body and at least two selected from the signal wave period, phase difference, duty cycle and signal level may be measured by means of a clock signal or subjected to analog/digital conversion in order to obtain output signal data.

The present invention has an advantage in that it is possible to detect actual deterioration from digital pulse signals output from an encoder, and to eliminate the wasted time and expense for the maintenance involved in taking the necessary measures.
- Figure 1: is a block diagram showing the basic configuration of the system for monitoring output signals of an encoder according to the present invention (Exemplary Embodiment 1);
- Figure 2: is a diagram of the clock and output waveform showing the method for measuring signals (Exemplary Embodiment 1);
- Figure 3: is a flowchart showing the processing steps in the method for monitoring output signals of an encoder according to the present invention (Exemplary Embodiment 2);
- Figure 4: is an analog and digital waveform diagram showing the output signals of an encoder according to the prior art;
- Figure 5: is a first analog and digital waveform diagram showing a situation in which the output signals of an encoder have deteriorated, according to the prior art; and
- Figure 6: is a second analog and digital waveform diagram showing a situation in which the output signals of an encoder have deteriorated, according to the prior art.

According to the present invention, a basic operating state of an encoder (operating speed, movement direction etc.), which serves as a reference for evaluating detection signals constituting rectangular digital signals, is set in an initial state such as when the encoder is fitted or after maintenance has been completed. Data relating to required parameters such as the output signal wave period, duty cycle, phase difference etc. during basic operation are then measured and associated with the basic operation and stored in a storage device as a basic value. After this, a measurement during the basic operating state is made if required, and this is compared with the basic value which is stored, and monitoring is performed in order to determine whether there is a difference with the measured value, and a warning is output if the measured value obtained differs from the basic value by more than a fixed amount. As a result, it is possible to perform maintenance when the encoder has actually deteriorated by more than a permitted value, and it is possible to minimize the time and costs involved in maintenance.

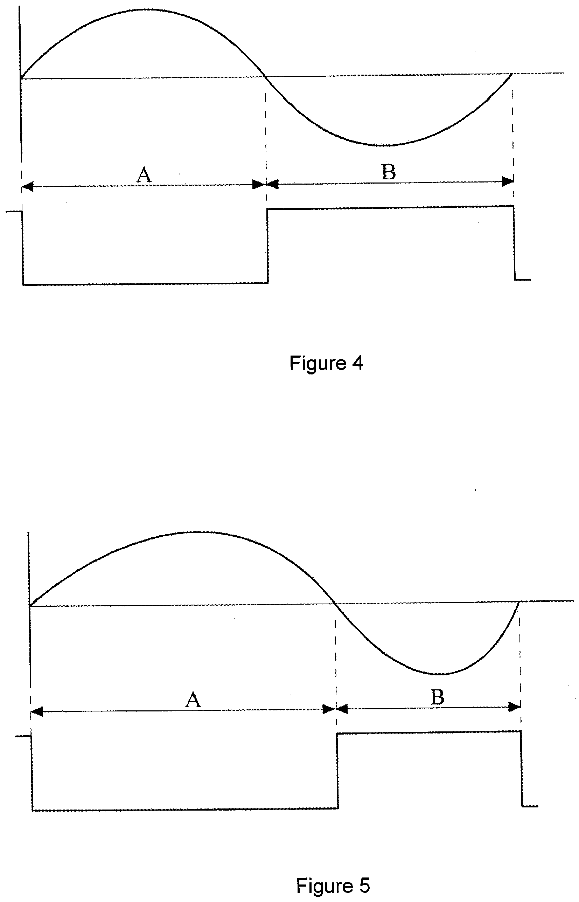

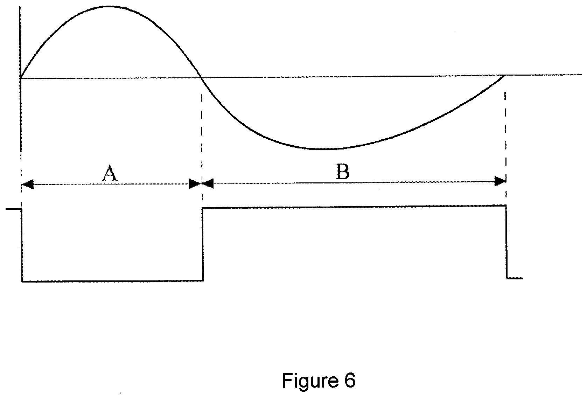

Here, the present invention will be applied to the exemplary case of an optical rotary encoder in order to make the content of the invention simpler to understand. As shown in Figure 4, for example, when the encoder is fitted or when maintenance has been completed, the analog waveform obtained from a light-detecting element can be defined as a signal in the initial state with a regular undisturbed waveform or with slight disturbance. This can therefore be specified as a signal in which the waveform-processed rectangular wave digital signal duty cycle is also regular or is in the initial state. However, when axial rocking and eccentricity are produced by deterioration over time, light which passes through the coding plate and is detected is disturbed and the intensity thereof varies, so the analog waveform output from the light-receiving element changes from the initial state, as shown in Figures 5 and 6, for example. The digital pulse wave duty cycle obtained by subjecting the analog waveform to signal processing such as waveform shaping then also varies.

The abovementioned wave duty cycle is stored as a measured value during the initial state, and this is compared with a measured value at any time. A warning signal or warning data etc. is output if a range of variation of the wave duty cycle obtained by the comparison is exceeded. Alternatively, data of the output signal itself or fluctuation data may be output for each measurement or under specific conditions. The state of the encoder can then be monitored by means of the warning data or comparison data, and maintenance can be efficiently carried out. It should be noted that in the example above, a procedure has been described in which the wave duty cycle for one signal is monitored, but monitoring is equally possible using the same procedure with two or more signals. Furthermore, the part which is monitored is not limited to the wave duty cycle and a more detailed appreciation of the situation can be obtained by monitoring one or more from among the wave period, phase difference and signal level etc. In addition, one or more, preferably two or more selected from the wave period, phase difference, duty cycle and signal level may be associated with one another for two or more output signals for monitoring, and as a result an even more detailed appreciation of the situation can be obtained.

In this way, an output signal measured during basic operation is measured, and the result is associated with basic operation and stored as a basic value; the same basic operation is carried out when required and the output signal is measured, and the measured value for each part of the operation is compared with the basic value, whereby the proportion of change from the basic value of the output signal can be ascertained. The comparison data and the proportion of change are then output as data, or a warning is output if the proportion of change is greater than a fixed amount, and as a result it is possible to ascertain if deterioration has actually occurred. When the measurement data of the output signal is associated with the basic operation, a measurement is taken of measurement items such as the period, duty cycle, phase difference and signal level for each part of the basic operation, e.g. forward or reverse operation at a predetermined speed which is set as at least one basic operation unit. Furthermore, it is also possible to combine basic operation units in multiple patterns and to treat these as basic operation. The measured values of the signals in basic operation should then be stored.

The device for analyzing and displaying warnings may be a controller for a machine tool or the like to which the encoder is fitted or it may be a separate external device, or it may be a processor or logic circuit etc. inside the encoder. Furthermore, the method for displaying a warning may involve display on a separate display device, or it may be communicated to a remote device, or a display device may be mounted on the encoder itself and the warning may be displayed thereon.

The warning method may involve showing the content of the warning as numerical data etc., or the content of the warning may be displayed on a display device as described above. Alternatively, the situation may be easily ascertained by means of a simple light-emitting display device such as an LED, with color or flashing, individually or combined using a simple configuration.

The encoder according to the present invention is not limited to an optical encoder in which the intensity of light produced in a code pattern is converted to an electrical signal, as described above. It is equally possible to use a different detection encoder such as a magnetic encoder. The present invention is not specified in terms of a detection principle or mechanical structure (absence or presence of a shaft, encoder shape). The present invention applies to all encoders which can be used for monitoring rectangular wave digital output signals after detection signal processing.

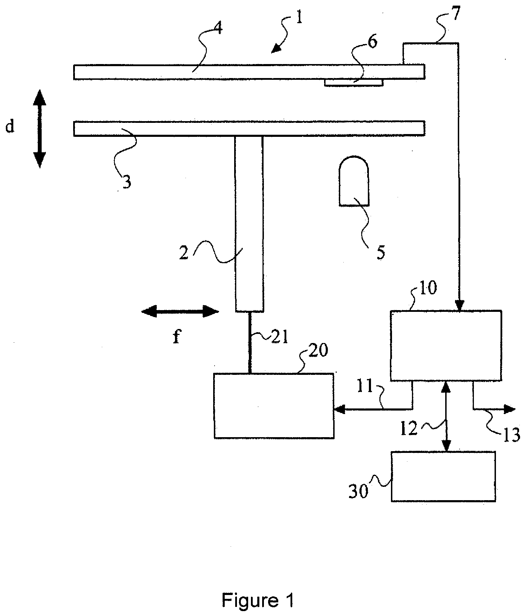

Exemplary embodiments will be given next in order to describe the present invention in more specific terms. Figure 1 is a schematic diagram showing an exemplary configuration of the encoder system according to one exemplary embodiment of the present invention. In the figure, the encoder system comprises: an encoder body 1 for measuring the displacement and movement distance etc. of an object being measured; a drive device 20 such as a machine tool which is the object being measured; a controller 10 for controlling the operation of the drive device 20 on the basis of measurement data from the encoder body; and a storage device 30 for associating a basic operation set for the operation of the drive device 20 with output data of the encoder at that time, and for storing the associated data.

The encoder body 1 comprises: an encoder shaft 2 which is connected to a rotary shaft 21 of the drive device 20 and turns by tracking rotational operation of the drive device; a disc-shaped coding plate 3 fitted to the encoder shaft 2; a fixed coding plate (not depicted); a light-emitting element 5 such as an LED which is provided inside a base (not depicted) of the encoder body; a light-receiving element 6 which is provided at a position on the opposite side to the light-emitting element 5 with the coding plate in between; and a circuit board 4 on which the light-receiving element 6 is mounted.

The operation of the encoder body will be described in simple terms. When the rotary shaft 21 of the drive device 20 rotates, the encoder shaft 2 connected thereto tracks this operation in the same way. At this point, the coding plate 3 attached to the encoder shaft 2 also operates in the same way. A code pattern producing predetermined signals which varies with the rotation is formed on the coding plate 3 which is generally formed by a transparent member such as glass. When light emitted from the light-emitting element 5 passes through the code pattern on the coding plate 3 and falls on the light-receiving element 6, a signal corresponding to the code pattern is generated. The output signal thus varies according to the operation of the coding plate.

The signal generated by the light-receiving element is an analog signal, but the required signal processing such as waveform shaping is performed by means of an element or circuit mounted on the circuit board 4 in order to convert said signal to a rectangular wave digital pulse signal. In this process, a plurality of light-receiving elements 6 is provided and the positions thereof are adjusted whereby it is possible to produce signals with a phase shift of 90°, for example. These signals are generally output as two signals with a phase difference of A and B, and are incremental signals. The phases of the two signals with the phase difference A and B are inverse in terms of the rotational direction, and therefore it is possible to measure the amount of rotational displacement and the rotation direction, while it is also possible to make an electrical addition count of these signals and to measure the number of revolutions by separately outputting a signal for one revolution.

Various kinds of signals are output from the encoder body in addition to the incremental signals, including zero signals, signals for measuring one revolution, and signals required for improving precision and managing equipment. Furthermore, the encoder body is not necessarily limited to a rotary encoder, and it is equally feasible to use what is known as a linear encoder in which a detector slides along a linear glass scale. Furthermore, the detection method is not limited to an optical method and a magnetic method or electromagnetic induction method is equally feasible.

Signals output from the encoder body 1 are input to the controller 10. The controller 10 has the function of controlling the drive device 20 in accordance with a preset program and input parameters. In this case, the controller 10 receives as input output signals from the encoder body 1 and the operating state of the drive device 20 is ascertained from that data. The drive device 20 is then controlled in such a way that the amount of movement obtained from the encoder body 1 and the amount of movement by which the drive device 20 should move are matching.

The drive device 20 is used in order to impart the required power to a machine tool, mounted tool or production robot etc. In the case of a machine tool, for example, it is used to move and position etc. a processing tool. In this case, one positional coordinate is normally controlled for each of the drive device 20 and encoder body 1 in the case of normal uniaxial control, two positional coordinates for biaxial control, and a further one coordinate each in the case of control in three dimensions. There is no particular limitation as to the form of the drive device 20 provided that it imparts power to equipment, and it may be a motor such as an induction motor, stepping motor or DC motor, or a pneumatic or hydraulic device.

The controller 10 causes the drive device 20 to operate with a predetermined basic operation during initial setting when the encoder is fitted or after maintenance etc. The basic operation is required for detecting deterioration by measuring the output signals of the encoder and the basic operation varies according to the intended use of the device and the state of use, so it is freely determined by the encoder manufacturer, user, or administrator etc. The basic operation is determined in terms of movement speed and movement direction for one or two or more operations. It should be noted that the basic operation may be automatically performed by the controller or may be manually performed in a sequential manner by an operator.

When the basic operation is carried out, an output signal commensurate with the operation of the drive device is output from the encoder body. The controller measures the output signal and associates data thereof with the basic operation and stores this information in the storage device 30. In this process, the data which is measured may include any one or two or more from among the wave period, duty cycle and signal level, and the phase difference may also be measured if two signals are output.

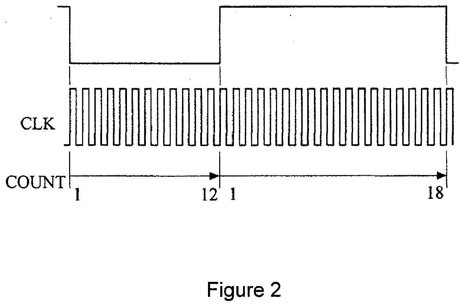

For the measurement method, the wave period, duty cycle and phase difference can be easily measured by using a clock, employing a clock signal inside the encoder, inside the controller or introduced from outside, or software. Specifically, as shown in Figure 2, the clock signal may be counted by an output signal start-up/end signal and the count value may be treated as measurement data of the output signal. In the example shown in the figure, the L-level of a rectangular wave pulse is counted by the clock as 12 and the H-level is counted by the clock as 18, and this serves as the measurement data. The signal level may be formed into data by A/D conversion, or a known circuit may be used such that a signal is generated at a predetermined voltage level.

The measurement data for the output signal at the time of the initial setting obtained in this way is associated with a basic operation pattern and stored in the storage device. There is no particular limitation as to the method of association and measurement data for each operating state or operation at each time in the basic operation pattern which has been set may be in a state whereby the data makes it clear what kind of operation is taking place or in a form which enables distinctions to be made. That is to say, data items measured when the same basic operation pattern is run at different times may be saved as data which can be compared. Specific methods which may be mentioned include: (a) a method of association with data from the drive device; (b) a method of association with data from the controller; and (c) a method of management using single operation patterns (numbers etc.).

For example, an m clock is stored for the wave period of an A-phase output signal at a speed of X m/s for forwards rotation, an n clock is stored for the duty cycle, an o clock is stored for the wave period of a B-phase output signal, a p clock is stored for the duty cycle, and q1, q2, q3, q4 clocks are stored for the phase difference of the A-phase signals and B-phase signals when this corresponds to four events. Furthermore, the abovementioned parameters at a speed of Y m/s and the abovementioned parameters in the reverse direction may be stored, as required.

In the actual storage element, for example, specific addresses may be allocated as storage regions for the abovementioned parameters for each operation, and when signals are compared, data of an address corresponding to the relevant operation can always be read out. Alternatively, data which is measured during basic operation may be continuously stored from a specified address and this data may be read out from the specified address during the comparison. The data may be stored and compared in the storage device in any way, and the storage and comparison should be carried out in such a way that the system control software can run efficiently.

After this, the same operation as described above is performed at a fixed interval or at any time as required, and output signal data in the basic operation pattern is measured. In this process, the controller compares the measurement data obtained with measurement data during the initial setting for basic operation. If the difference with the compared measurement data is greater than a fixed value, it is determined that the encoder has deteriorated, and a warning is output. Alternatively, this data may be output for each measurement or for each comparison. As described above, the warning may be output as specific data, or may be displayed on a display device. Furthermore, the warning may be displayed in a simple manner by emission of light from a simple light-emitting element provided in the encoder body or the controller.

It should be noted that the abovementioned example has been described in relation to a case in which the controller 10 is a controller for a whole system in which the controller for the drive device 20 and the controller for the encoder body constitute a single element, but the controller for the drive device 20 may be a separate element and the controller for the encoder may measure and monitor encoder output signals. In this case, the basic operation is performed by the controller for the drive device, but if it can be ascertained that the controller for the encoder is carrying out the basic operation, output signals of the encoder at this time may be processed as signals which are output in accordance with the defined basic operation pattern.

In addition, a device for measuring encoder output signals, outputting the data thereof and outputting warning data and signals, which is to say a dedicated controller for the monitoring system, may be provided. In this case, such a device is not incorporated into the controller 10 for the drive device or into the actual drive device 20, but it may be connected between the output of the encoder and the controller 10, and may receive as input encoder output signals in series or parallel as a separate device to the controller 10 for the drive device.

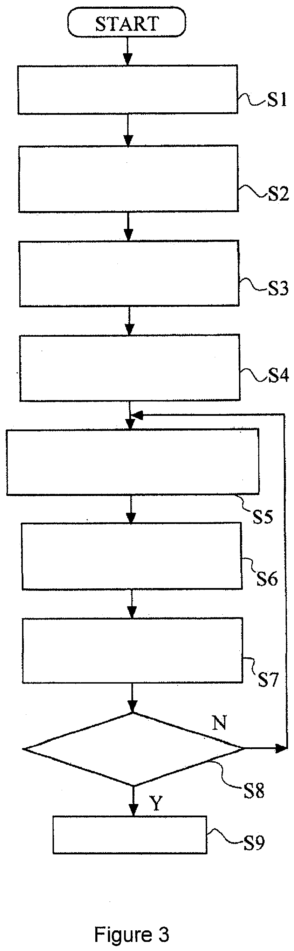

The method according to the present invention will be described in conjunction with the flowchart shown in Figure 3.

First of all, during the initial setting such as fitting to the device or during maintenance, a basic operation pattern for the object being measured is set. This setting may be stored in the drive device, the encoder controller or the storage device, and it may simply be determined as a basic operation pattern for subsequent repeated basic operations (S1). Next, the object being measured is operated in accordance with the basic operation pattern which has been set (S2). In this process, required parameters of the output signal output from the encoder body are measured (S3). Next, the items of measurement data obtained are associated with the basic operation pattern and stored in the storage device (S4).

After this, the object being measured is operated in accordance with the basic operation pattern, as required (S5), and in (S6) required parameters of the output signal output from the encoder body are measured in the same way as in step (S3). The output signal measured at this time and the output signal data for the initial state which is stored in the storage device are compared (S7), and the actual data for this is output each time or as required, and if the difference between the two signals is greater than a fixed value (S8), a warning signal or warning data is output, as required (S9). It should be noted that if the measurement data is output each time, as described above, there is no need for a warning signal or warning data to be output.

The method according to the present invention can be implemented by a device such as that shown in the figures in relation to Exemplary Embodiment 1, but this is not limiting and the method can be implemented provided that the device has an encoder which outputs a rectangular wave digital pulse signal as an output signal. Furthermore, the storage device and controller for measuring signals and processing data may be specially provided, and an arithmetic unit built-in to the encoder or a controller for a device to which the encoder is fitted may be used.

The present invention has been described in terms of the exemplary embodiments, but the present invention is not limited to these exemplary embodiments. Furthermore, the encoder output signals are not limited to two signals with a phase difference, known as incremental signals, and various forms of signals output from various kinds of encoders may be used. For example, in addition to the abovementioned two signals with a phase difference, signals including a zero signal (Z phase) and/or a CS signal with a phase difference every 120° may be used, or only one signal may be used to provide a simple signal configuration. In this way, by freely changing the items which are to be measured correspondingly with the encoder, a warning can be output for each signal or a warning can be output with the signals integrated.

The system and method for monitoring output signals of an encoder according to the present invention may be used in an encoder which measures the amount of displacement of an object being measured, the amount of movement, the direction of rotation, the direction of movement, or the rotation or movement speed etc. If the encoder outputs a rectangular wave digital signal pulse as the output signal, the present invention may be applied to a rotary encoder or a linear encoder, and the present invention may be used regardless of the detection method, such as optical, magnetic or electromagnetic induction. Furthermore, by using an arithmetic unit or clock etc. having a circuit built-in to the encoder, it is possible to implement the present invention without providing a new circuit or external device, and maintenance can be optimized at low cost.

## Claims

1. System for monitoring output signals of an encoder, comprising:
• an object (20) being measured which is rotated or moved;
• an encoder body (1) which outputs output signals commensurate with the amount of displacement or the amount of movement of the object (20) being measured;
• a controller (10) for determining a warning output by comparing an output signal from the encoder body (1) with output signal data stored in a storage device (30), wherein
the storage device (30) is adapted to store basic operation patterns of the object (20) being measured and signals output from the encoder body (1), and wherein
the controlled (10) is adapted to
• associate a basic operation pattern of the object (20) being measured which has been set in an initial state with an output signal output from the encoder body (1) at that time and
• store this association in the storage device (30) and
• compare the output signal from the encoder body (1) obtained by subsequent basic operation with the output signal data from basic operation in the initial state which is stored in the storage device (30), and
• output this comparison data or measurement data or a warning if the difference between the two signals is greater than a fixed reference value,
and wherein the basic operation is determined by a movement speed and/or a movement direction of the encoder.

2. System according to claim 1, wherein at least two signals are output from the encoder body (1), and at least two selected from the signal wave period, phase difference, duty cycle and signal level are measured by means of a clock signal or subjected to analog/digital conversion in order to obtain output signal data.

3. Method for monitoring output signals of an encoder, wherein
• a basic operation pattern of an object (20) being measured is set and operated in an initial state and an output signal output from an encoder body (1) correspondingly with the basic operation is associated with the basic operation pattern and stored in a storage device (30),
• the object (20) being measured is then operated in accordance with the basic operation pattern,
• an output signal output from the encoder body (1) is measured at that time and
• the measurement data obtained and output signal data in the initial state stored in the storage device (30) are compared and this comparison data or measurement data, or a warning is output if the difference between the two signals is greater than a fixed magnitude,
and wherein the basic operation is determined by a movement speed and/or a movement direction of the encoder.

4. Method for monitoring output signals of an encoder, according to claim 3, in which at least two signals are output from the encoder body (1), and at least two selected from the signal wave period, phase difference, duty cycle and signal level are measured by means of a clock signal or subjected to analog/digital conversion in order to obtain output signal data.

## Patentansprüche

1. System zum Überwachen von Ausgangssignalen eines Codierers, das Folgendes umfasst:
- einen Gegenstand (20), der vermessen wird und der gedreht oder bewegt wird;
- einen Codiererkörper (1), der Ausgangssignale proportional zu dem Betrag der Verschiebung oder dem Betrag der Bewegung des Gegenstands (20), der gemessen wird, ausgibt;
- eine Steuereinheit (10) zum Bestimmen einer Warnausgabe durch Vergleichen eines Ausgangssignals von dem Codiererkörper (1) mit Ausgangssignaldaten, die in einer Speichervorrichtung (30) gespeichert sind, wobei die Speichervorrichtung (30) ausgelegt ist, Grundbetriebsmuster des Gegenstands (20), der vermessen wird, und Signale, die von dem Codiererkörper (1) ausgegeben werden, zu speichern, und wobei die Steuereinheit (10) ausgelegt ist,
- ein Grundbetriebsmuster des Gegenstands (20), der gemessen wird, das in einem Anfangszustand eingestellt wurde, einem von dem Codiererkörper (1) zu diesem Zeitpunkt ausgegebenen Ausgangssignal zuzuordnen und
- diese Zuordnung in der Speichervorrichtung (30) zu speichern und
- das von dem Codiererkörper (1) ausgegebene Ausgangssignal, das durch einen anschließende Grundbetrieb erhalten wurde, mit den Ausgangssignaldaten von dem Grundbetrieb in dem Anfangszustand, die in der Speichervorrichtung (30) gespeichert sind, zu vergleichen und
- diese Vergleichsdaten oder Messdaten oder eine Warnung auszugeben, wenn der Unterschied zwischen den beiden Signalen größer als ein festgelegter Referenzwert ist,
und wobei der Grundbetrieb durch eine Bewegungsgeschwindigkeit und/oder eine Bewegungsrichtung des Codierers bestimmt ist.

2. System nach Anspruch 1, wobei mindestens zwei Signale von dem Codiererkörper (1) ausgegeben werden und mindestens zwei, die aus der Signalwellenperiode, dem Phasenunterschied, dem Arbeitszyklus und dem Signalpegel ausgewählt sind, mit Hilfe eines Taktsignals gemessen werden oder einer Analog/Digital-Umsetzung unterzogen werden, um Ausgabesignaldaten zu erhalten.

3. Verfahren zum Überwachen von Ausgangssignalen eines Codierers, wobei
- ein Grundbetriebsmuster eines Gegenstands (20), der gemessen wird, eingestellt wird und in einem Anfangszustand betrieben wird und ein Ausgangssignal, das von einem Codiererkörper (1) entsprechend dem Grundbetrieb ausgegeben wird, dem Grundbetriebsmuster zugeordnet wird und in einer Speichervorrichtung (30) gespeichert wird,
- das Objekt (20), das gemessen wird, dann in Übereinstimmung mit dem Grundbetriebsmuster betrieben wird,
- ein Ausgangssignal, das von dem Codiererkörper (1) ausgegeben wird, zu diesem Zeitpunkt gemessen wird und
- die erhaltenen Messdaten und die in dem Anfangszustand in der Speichervorrichtung (30) gespeicherten Ausgangssignaldaten verglichen werden und diese Vergleichsdaten oder Messdaten oder eine Warnung ausgegeben wird, wenn der Unterschied zwischen den beiden Signalen größer als eine festgelegte Größe ist, und wobei der Grundbetrieb durch eine Bewegungsgeschwindigkeit und/oder eine Bewegungsrichtung des Codierers bestimmt ist.

4. Verfahren zum Überwachen von Ausgangssignalen eines Codierers nach Anspruch 3, wobei mindestens zwei Signale von dem Codiererkörper (1) ausgegeben werden und mindestens zwei, die aus der Signalwellenperiode, dem Phasenunterschied, dem Arbeitszyklus und dem Signalpegel ausgewählt sind, mit Hilfe eines Taktsignals gemessen werden oder einer Analog/DigitalUmsetzung unterzogen werden, um Ausgangssignaldaten zu erhalten.

## Revendications

1. Système de surveillance de signaux de sortie d'un codeur, comprenant :
- un objet (20) soumis à la mesure qui est mis en rotation ou déplacé ;
- un corps de codeur (1) qui fournit en sortie des signaux de sortie proportionnels à la quantité de déplacement ou à la quantité de mouvement de l'objet (20) soumis à la mesure ;
- une unité de commande (10) destinée à déterminer une sortie d'alarme en comparant un signal de sortie du corps de codeur (1) à des données de signal de sortie stockées dans un dispositif de stockage (30), dans lequel
le dispositif de stockage (30) est apte à stocker des configurations de fonctionnement de base de l'objet (20) soumis à la mesure et une sortie de signaux du corps de codeur (1), et dans lequel
l'unité de commande (10) est conçue pour
- associer une configuration de fonctionnement de base de l'objet (20) soumis à la mesure qui a été définie dans un état initial à un signal de sortie fourni en sortie par le corps de codeur (1) à cet instant, et
- stocker cette association dans un dispositif de stockage (30) et
- comparer le signal de sortie du corps de codeur (1) obtenu par un actionnement de base suivant aux données de signaux de sortie résultant de l'actionnement de base dans l'état initial qui est stocké dans le dispositif de stockage (30), et
- fournir en sortie ces données de comparaison ou ces données de mesure ou une alarme si la différence entre les deux signaux est supérieure à une valeur de référence fixe,
et dans lequel l'actionnement de base est déterminé par une vitesse de mouvement et/ou une direction de mouvement du codeur.

2. Système selon la revendication 1, dans lequel au moins deux signaux sont fournis en sortie par le corps de codeur (1), et au moins deux éléments choisis parmi la période d'onde du signal, la différence de phase, le rapport cyclique et le niveau de signal, sont mesurés au moyen d'un signal d'horloge ou sont soumis à une conversion analogique/numérique afin d'obtenir des données de signaux de sortie.

3. Procédé de surveillance de signaux de sortie d'un codeur, dans lequel :
- une configuration d'actionnement de base d'un objet (20) soumis à la mesure est définie et mise en oeuvre dans une état initial et un signal de sortie obtenu en sortie d'un corps de codeur (1) d'une manière qui correspond à l'actionnement de base est associée à la configuration d'actionnement de base et est stockée dans un dispositif de stockage (30),
- l'objet (20) soumis à la mesure est ensuite actionné conformément à la configuration d'actionnement de base,
- un signal de sortie fourni en sortie par le corps de codeur (1) est mesuré à cet instant et
- les données de mesure obtenues et les données de signaux fournis en sortie dans l'état initial stocké dans le dispositif de stockage (30) sont comparées et ces données de comparaison ou ces données de mesure ou un avertissement sont fournis en sortie si la différence entre les deux signaux est supérieure à une amplitude fixe,
et dans lequel l'actionnement de base est déterminé par une vitesse de mouvement et/ou une direction de mouvement du codeur.

4. Procédé de surveillance de signaux de sortie d'un codeur selon la revendication 3, dans lequel au moins deux signaux sont fournis en sortie par le corps de codeur (1), et au moins deux éléments choisis parmi la période d'onde du signal, la différence de phase, le rapport cyclique et le niveau de signal sont mesurés au moyen d'un signal d'horloge ou sont soumis à une conversion analogique/numérique afin d'obtenir des données de signaux de sortie.
